# EUROPEAN PATENT APPLICATION

(11) **EP 0 726 052 A1**
(43) Date of publication of application: **14.08.1996**
(21) Application number: 96300546.7
(22) Date of filing: 26.01.1996
(51) Int. Cl.: A47J 27/09, A47J 27/08

(54) **Cover for a pressure vessel**

(30) Priority: 27.01.1995 GB 9501641
(71) Applicant: PRESTIGE GROUP UK PLC, Burnley, Lancashire BB11 2AB (GB)
(72) Inventor: Wilkinson, Amanda, Warwick, Warwickshire (GB); Moore, Stephen, Egham, Surrey (GB); Whitlock, Peter, Kenilworth, Warwickshire (GB)
(74) Representative: Marles, Alan David

(57) **Abstract**

There is provided a cover (12) for a pressure cooker, which cover has a detachable housing (17) incorporating a sealing member (21). The housing (17) also supports a pressure regulating valve (13) and a safety valve (14) by way of formations (20) around which the sealing member (21) forms seals. Whichever valve (13, 14) vents, the steam etc. will be channelled into a common chamber having a single outlet (22).

## Description

This invention relates to covers for pressure vessels, particularly but not exclusively pressure cookers.

According to a first aspect of the present invention there is provided a cover for a pressure cooker comprising a pressure regulating valve, a safety valve, and housing means incorporating sealed passage means for receiving any matter exhausted from both valves and directing said matter out of said housing through a common outlet means.

Preferably said outlet means is constituted by a single outlet. Another preferred feature is that said housing means is releasably connected to the pressure cooker cover.

A further feature is that said valves are releasably attached to the housing means.

Conveniently a rubber sealing element is provided between the housing means and the cover to define said passage means.

Another feature is that the cover incorporates a pressure indicating valve which is located within said housing means.

Also the passage means is in the form of an expansion chamber thereby reducing the noise of the cooker.

According to a second aspect of the present invention there is provided a pressure cooker comprising a main body and a cover as discussed above.

An embodiment of the present invention will now be described in more detail. The description makes reference to the accompanying drawings in which:

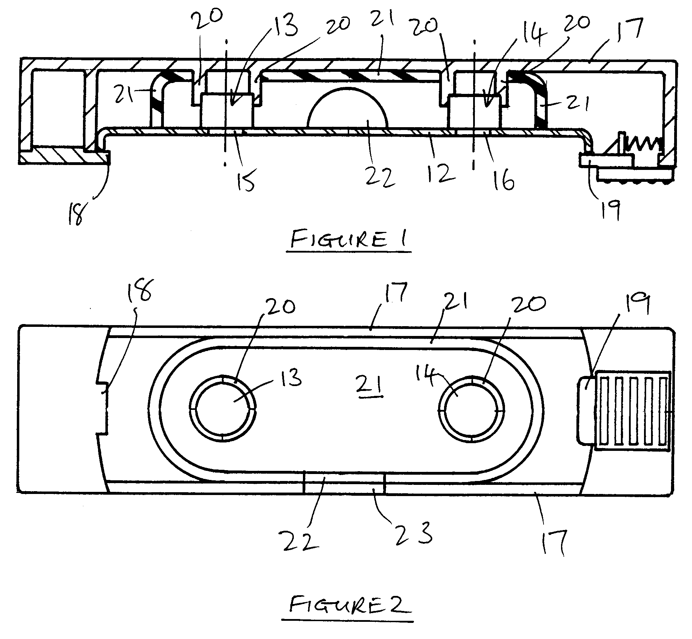

Figure 1 is a cross-section through a cover according to the present invention,
Figure 2 is an underplan view of the housing of the figure 1 arrangement, and

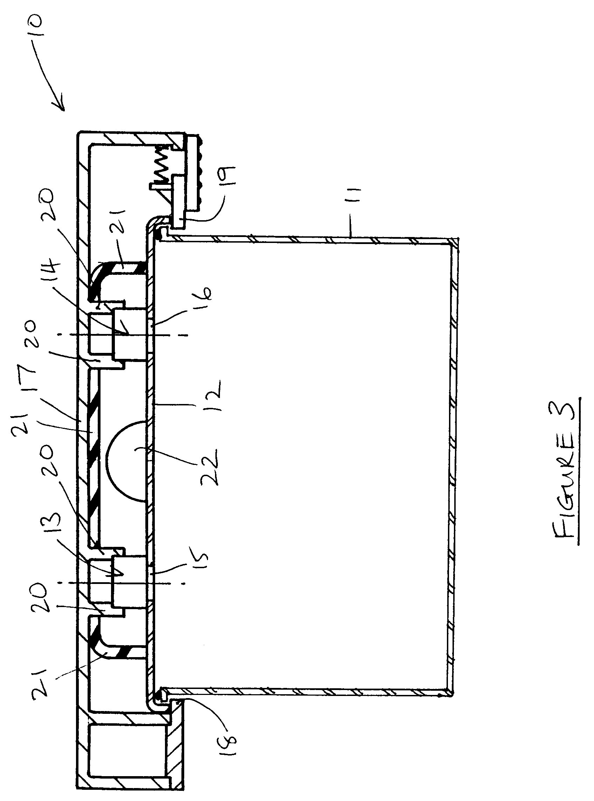

Figure 3 is a cross-section through the figure 1 cover attached to a pressure cooker base.

In the figures there is shown a pressure cooker 10 having a base 11 and a cover 12. In use the base 11 and the cover 12 are securely interconnected in a sealing manner to allow pressure to build up within the cooker. The interconnection means itself is not shown.

By way of introduction a pressure cooker generally incorporates two valves, which valves are acted upon by the internal pressure in the cooker. These valves are a pressure regulating valve shown schematically as 13 and a safety valve shown schematically as 14. The pressure regulating valve 13 is typically set by the user according to the desired pressure within the cooker and the valve 13 communicates with the interior via a hole 15 in the cover. The valve of course forms a seal around the hole 15 and relieves the interior pressure when the set pressure is exceeded. The safety valve 13 is usually constructed to vent the interior when the pressure exceeds a safe value in excess of any possible set value of the regulating valve 13. This high pressure may for instance be the result of faulty operation of the regulating valve or the accidental blockage of the hole 15 by debris such as food from inside the cooker. Again, the safety valve communicates with the inside of the cooker via a hole 16 and the valve 14 also forms a seal around the hole 16 during use.

In the arrangement shown, the cover 12 has an external housing in the form of moulding 17 which is releasably attached to the cover 12 by way of a lip 18 and a spring loaded latch 19. The valves 13, 14 are supported in the moulding 17 by formations 20 and are detachable therefrom. When the moulding 17 is attached to the cover 12, the formations 20 ensure that the valves 13, 14 are securely seated around their respective holes 15, 16.

Also provided in the moulding 17 is a sealing member 21 which seals around the formations 20 and which seals with the cover 12 around its lower edge except for a cut-away portion 22. This portion 22 is aligned with a corresponding cut-away 23 in the moulding 17.

When in use, it will be appreciated that whichever valve vents, the steam etc. from the inside of the cooker will be channelled in the same, known direction, namely through cut-away 23. It has also been found that the venting into the chamber defined between the cover 12 and the sealing member 21 has a silencing effect on the escaping steam. In other words the chamber acts as an expansion chamber to silence the high velocity escaping steam.

Also, by suitable design the valves 13, 14 can be removable from their supporting formations 20 when the moulding 17 is removed from the cover 12. This enables the sealing member 21 and all steam pathways to be readily accessible for cleaning and allows the valves to be easily replaced if necessary.

It will be appreciated that the shape, dimensions and configuration of the moulding, sealing member, valves and cut-aways can be varied as desired. For example, two or more common outlets could be provided, but the single direction outlet is preferred. Also the moulding could incorporate a pressure indicating device adapted to be sealingly engaged around a further hole in the cover. However, such devices do not vent steam from the inside of the cooker and do not, therefore, have a significant bearing on the common channelling of vented steam.

It is also possible to have the valves 13, 14 secured on the cover with just the moulding 17 being detachable whilst still creating a common chamber around the valves for channelling the vented steam. Furthermore the precise method of securing the moulding 17 discussed above is of course just an example of a suitable arrangement.

## Claims

1. A cover for a pressure cooker comprising a pressure regulating valve, a safety valve, and housing means incorporating sealed passage means for receiving any matter exhausted from both valves and directing said matter out of said housing through a common outlet means.

2. A cover as claimed in claim 1 wherein said outlet means is constituted by a single outlet.

3. A cover as claimed in claim 1 or claim 2 wherein said housing means is releasably connected to the pressure cooker cover.

4. A cover as claimed in any one of claims 1 to 3 wherein said valves are releasably attached to the housing means.

5. A cover as claimed in any one of claims 1 to 4 wherein a rubber sealing element is provided between the housing means and the cover to define said passage means.

6. A cover as claimed in any one of claims 1 to 5 wherein the cover incorporates a pressure indicating valve which is located within said housing means.

7. A cover as claimed in any one of claims 1 to 6 wherein the passage means is in the form of an expansion chamber thereby reducing the noise of the cooker.

8. A pressure cooker comprising a main body and a cover as claimed in any one of claims 1 to 7.
